# EUROPÄISCHE PATENTSCHRIFT

(11) **EP 0 453 542 B1**
(45) Veröffentlichungstag und Bekanntmachung des Hinweises auf die Patenterteilung: **23.03.1994**
(21) Anmeldenummer: 90916730.6
(22) Anmeldetag: 14.11.1990
(51) Int. Cl.: H02G 3/08

(54) **STRAHLWASSERGESCHÜTZTES ANSCHLUSSGEHÄUSE FÜR ELEKTRISCHE VERBRAUCHER**
SPRAY-PROTECTED CONNECTION HOUSING FOR ELECTRICAL CONSUMERS
BOITE DE JONCTION PROTEGEE CONTRE LES JETS D'EAU POUR CONSOMMATEURS ELECTRIQUES

(30) Priorität: 15.11.1989 DE 3937965; 19.04.1990 DE 4012443; 02.05.1990 DE 4014050
(43) Veröffentlichungstag der Anmeldung: 30.10.1991
(73) Patentinhaber: MODELEC S.A., CH-2800 Delémont (CH)
(72) Erfinder: SCHULTE, Siegfried, D-5880 Lüdenscheid (DE); AULMANN, Manfred, D-5885 Schalksmühle (DE)
(74) Vertreter: Hassler, Werner, Dr.
(86) Internationale Anmeldenummer: EP9001944
(87) Internationale Veröffentlichungsnummer: WO9107794

(56) Entgegenhaltungen:
- DE-A- 2 824 477
- DE-U- 6 602 970
- US-A- 4 620 061

## Beschreibung

### Technisches Gebiet der Erfindung

Die Erfindung betrifft ein Strahlwassergeschütztes Anschlußgehäuse für elektrische Verbraucher mit einem Gehäuseunterteil, das an der Deckelseite einen umlaufenden Dichtsteg aufweist, und mit einem Deckel, dessen umlaufende Dichtleiste ein rinnenförmiges Profil hat den zwei durch einen Spalt getrennte Zungen aufweisenden Dichtsteg abdichtend übergreift, wobei die Wände des Gehäuseunterteils Fenster zur Aufnahme je eines Dichtflansches eines Anschlußteils aufweisen.

### Stand der Technik

Ein Anschlußgehäuse ist in dem DE-GM 80 08 956 beschrieben. Die Abdeckung zwischen Gehäuseunterteil und Deckel ist sehr schwierig. Obgleich mehrere Ringstufen vorgesehen sind, die eine labyrinthartige Abdichtung ergeben, läßt sich kaum eine Abdichtung entsprechend den Vorschriften für strahlwassergeschützte Installationsgeräte verwirklichen.

Ein Anschlußgehäuse der eingangs genannten Art ist aus der DE-A-28 24 477 bekannt. Es sind dort in den Seitenwänden verhältnismäßig kleinflächige Leitungseinführungen vorgesehen. Anschlußteile wie Stecker und dergleichen benötigen in den Seitenwänden großflächige Abdichtungennund Befestigungen. Derartige Abdichtungen sind schwierig.

### Zusammenfassung der Erfindung

Aufgabe der Erfindung ist eine vollständige Abdichtung der Einführung großflächiger Anschlußteile.

Eine Abdichtung im Bereich des Anschlußteils wird dadurch erzielt, daß jedes als Ausschnitt in einer Wand ausgebildete Fenster einen Umriß aus Geradenabschnitten und zentrischen Kreisbogenabschnitten mit gleichem Halbmesser hat, die jeweils zusammen einen n-tel-Teilbogen, mit n = 3, 4 ..., des Vollkreisbogens ausmachen, daß ein Kragen des Dichtflansches des Anschlußteils einen Außenumriß gleich dem Umriß des Fensters hat und daß der Hals des Kragens sich jeweils über einen n-tel-Teilbogen erstreckende Teilprofile aus einem von der Mitte eines Geradenabschnitts ausgehenden Kreisbogenabschnitt und einen tangential daran anschließenden Geradenabschnitt aufweist.

Die Erfindung unterscheidet sich insofern vom Stand der Technik, als die Dichtflansche der Anschlußteile als Drehverbindungen ausgebildet sind, die beim Einsetzen durch Drehen über einen Teilkreisbogen dicht angezogen werden.

Der Verriegelungsweg wird dadurch bestimmt, daß sich der Kreisbogenabschnitt des Teilprofils des Halses über den halben n-tel-Teilbogen erstreckt.

Einen festen Anzug und eine gute Abdichtung erzielt man dadurch, daß die Flanschunterseite jeweils ein in Richtung des Kreisbogenabschnitts ansteigendes Rampenprofil hat.

Eine jeweils rechtkantige Ausrichtung erzielt man dadurch, daß der Umriß des Fensters und das Halsprofil jeweils vierzählig bemessen sind. Man kann so das Anschlußteil in vier verschiedenen, jeweils um 90° gegeneinander versetzten Stellungen ausrichten.

Gegen ungewollte Betätigung erreicht man dadurch eine hohe Sicherheit, daß bezogen auf die Einsteckrichtung der Flansches der Kreisbogenabschnitt des Halsprofils sich in positiver Umfangsrichtung gegen den Geradenabschnitt hin erstreckt. Dies bedeutet, daß das Anziehen der Flanschverbindung durch eine Linksdrehung erfolgt. Eine Lösebewegung aufgrund einer Linksdrehung führt somit zu einem verstärkten Anzug.

Eine Sicherung in der Anzugstellung erzielt man dadurch, daß der Flansch rastend mit dem Fenster zusammenwirkt.

Eine Ausführung der Rastung ist derart ausgebildet, daß auf der Stirnfläche des Dichtflansches Rastzähne angeordnet sind, die mit mindestens einer Rastzunge des Gehäuseunterteils zusammenwirken.

Eine Verrieglung von der Deckelseite wird dadurch ermöglicht, daß auf der Stirnfläche des Dichtflansches Rastzähne angeordnet sind, die mit einer Rastzunge des Gehäusedeckels zusammenwirken. Das Anschlußteil kann vor oder nach Aufsetzen des Gehäusedeckels eingerastet werden.

Eine Lösbarkeit der Rastung wird dadurch sichergestellt, daß die Rastzungen aus der Raststellung ausrückbar ausgebildet sind.

Eine geschlossene und gleichmäßige Ausbildung der Dichtlinie wird dadurch erzielt, daß der Dichtsteg und die Dichtleiste in den Eckenbereichen des Anschlußgehäuses mit einem Bogen größeren Durchmessers als der Außenbogen des Gehäuses verlaufen und jeweils einen sichelförmigen Kanal für den Durchtritt eines Haltefußes des Deckels freilassen.

Eine formschlüssige Verrastung des Gehäusedeckels wird dadurch sichergestellt, daß der Haltefuß eine nach außen gerichtete Rastnase aufweist, die in einen Ausbruch in der Wand des Kanals eingreift.

Eine ungewollte Aufhebung der Verrastung wird dadurch verhindert, daß innerhalb des Kanals ein in Kanallängsrichtung verschiebbarer Verriegelungsschieber angeordnet ist, der in Verriegelungsstellung den Haltefuß in Rasteingriff mit dem Ausbruch des Kanals hält. Man erreicht so einen Strahlwasserschutz, weil eine Aufhebung der Verrastung auch durch einen Druckwasserstrahl nicht möglich ist.

Eine Sicherung des Verriegelungsschiebers wird dadurch erreicht, daß der Verriegelungsschieber ein Verriegelungsprofil aufweist, das in der Verriegelungsstellung mit einem Verriegelungsprofil des Haltefußes in Eingriff ist.

Eine Selbsthaltung des Verriegelungsschiebers wird dadurch erreicht, daß der Verriegelungsschieber einen sichelförmigen Querschnitt entsprechend dem Querschnitt des Kanals hat.

Eine verbesserte Abdichtwirkung wird dadurch erzielt, daß die Breite des Dichtsteges größer als die lichte Weite des rinnenförmigen Profils ist.

Damit die kapillaren Kriechwege auf einem großen Wegabschnitt unterbrochen sind, sieht die Erfindung nach einer Weiterbildung vor, daß das rinnenförmige Profil in zusammengefügtem Zustand des Anschlußgehäuses einen Zwischenraum oberhalb der Zungenenden freiläßt.

Eine zusätzliche Abdichtung wird dadurch erzielt, daß der Dichtsteg eine umlaufende Außenstufe mit einer Umfangsrinne aufweist und daß die Dichtleiste mit einem Stirnrand in die Umfangsrinne eingreift.

Eine äußere Abdichtung wird dadurch sichergestellt, daß die Außenstufe und der Stirnrand jeweils Kegelflächen aufweisen.

Diese äußere Abdichtung wird dadurch besonders sicher gestaltet, daß die äußere Kegelfläche des Stirnrandes eine größere Steilheit als die entsprechende Kegelfläche der Umfangsrinne aufweist.

### Kurzbeschreibung der Zeichnungen

Ausführungsformen der Erfindung werden im folgenden unter Bezugnahme auf die anliegenden Zeichnungen erläutert, in denen darstellen:
- Fig. 1: eine Ansicht eines Anschlußgehäuses aus Gehäuseunterteil und Deckel,
- Fig. 2: eine Draufsicht auf das Gehäuseunterteil,
- Fig. 3: einen Teilschnit durch den oberen Rand des Gehäuseunterteils und den Deckel zur Erläuterung der Abdichtung,
- Fig. 4: die Abdeckung in zusammengefügtem Zustand,
- Fig. 5: eine vergrößerte Einzelansicht zur Erläuterung der Abdichtprofile,
- Fig. 6: einen Schnitt nach der Linie VI-VI in Fig. 2,
- Fig. 7: einen vergrößerte Ausschnitt VII in Fig. 6,
- Fig. 8: eine vergrößerte Stirnansicht eines Anschlußteils,
- Fig. 9: eine Draufsicht zu Fig. 8,
- Fig. 10: eine der Fig. 1 entsprechende Ansicht einer abgewandelten Ausführungsform des Anschlußgehäuses,
- Fig. 11: einen Schnitt des Anschlußgehäuses mit aufgesetztem Deckel in Verriegelungseingriff mit einem Anschlußteil,
- Fig. 12: eine vergrößerte Einzelansicht der Anordnung eines Haltefußes in Verbindung mit dem sichelförmigen Kanal und
- Fig. 13: einen Schnitt nach der Linie Xlll-Xlll in Fig. 12.

### Ausführungsbeispiele

Das Gehäuseunterteil 1 umfaßt im wesentlichen eine Bodenwand 2 und vier Seitenwände 3. Das Gehäuseunterteil 1 ist am oberen Stirnrand, also an der Deckelseite offen. Die Ecken des oberen Stirnrandes sind als Außenbogen 4 gestaltet. Der obere Stirnrand weist eine umlaufende Außenstufe 5 als Anschlag und Dichtkante für einen Deckel 6 auf. An die Außenstufe 5 schließt sich ein Dichtsteg 7 an, der noch in Einzelheiten erläutert wird. Der Dichtsteg 7 und die Außenstufe 5 sind umlaufend ausgebildet und haben in den Eckenbereichen Bogenabschnitte 8 mit größerem Durchmesser als die Außenbögen 4, so daß zwischen jedem Außenbogen 4 und dem zugehörigen Bogenabschnitt 8 jeweils ein sichelförmiger Kanal 9 für den Durchtritt eines Haltefußes 10 des Deckels 6 begrenzt ist.

Innerhalb jeder Seitenwand 3 und gegebenenfalls auch der Bodenwand 2 ist ein Fenster 11 ausgebildet, das einen profilierten Ausschnitt hat und zur Aufnahme von Anschlußteilen dient, was im einzelnen noch näher erläutert wird. In den Eckenbereichen sind Durchbrüche 25 mit Rastflächen für die Haltefüße 10 vorgesehen.

Der Dichtsteg 7 endet stirnseitig in zwei Zungen 32, die durch einen Spalt 33 getrennt sind, so daß sich die Zungen 32 gegeneinander verformen können. Die Außenstufe 5 weist eine Umfangsrinne 52 auf, wobei die Umfangsrinne 52 über eine Kegelfläche 53 in die äußere Umfangsstufe 5 übergeht.

Der Deckel 6 weist eine umlaufende Dichtleiste 54 auf, die auf den Dichtsteg 7 ausgerichtet ist. Die Dichtleiste 54 hat zwei Schenkel 34 und 36, die ein rinnenförmiges Profil 35 begrenzen. Die lichte Weite des Profils 35 ist kleiner als der Abstand der Außenseiten der Zungen 32. Der Schenkel 36 endet in einem nach innen abgesetzten Stirnrand 37, der über eine Kegelfläche 31 abgesetzt ist. Die Kegelfläche 31 hat eine größere Steilheit als die Kegelfläche 13 und auch eine etwas größere Tiefe.

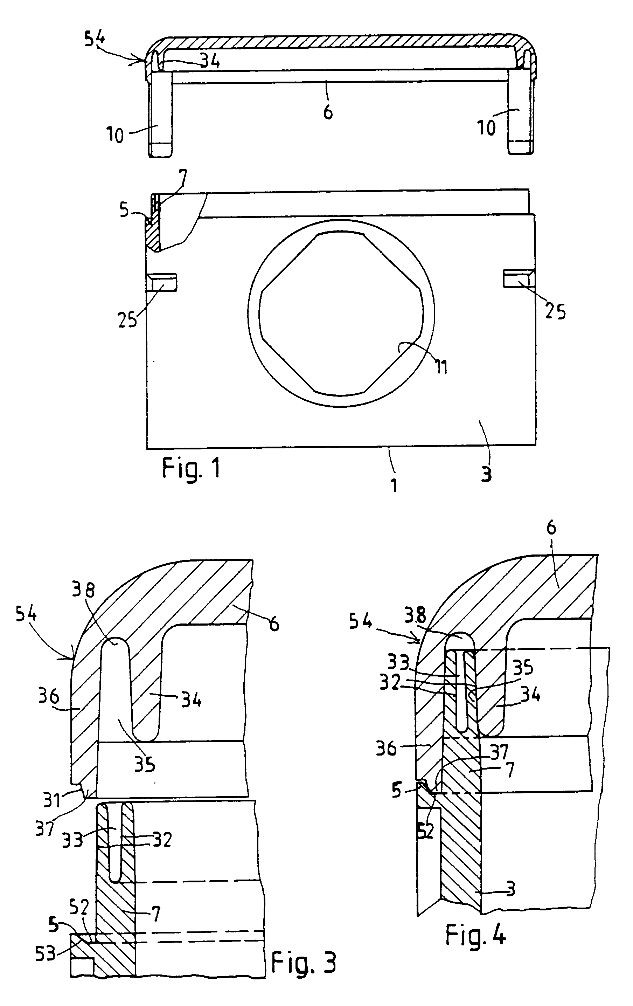

Fig. 3 zeigt die Teile der Abdichtung des Deckels, also insbesondere den Dichtsteg 7 und die Dichtleiste 54 in voneinander getrenntem Zustand. Man erkennt deutlich, daß die äußere Breite der Zungen 32 größer als die lichte Weite des rinnenförmigen Profils 35 ist. Beim Aufsetzen des Deckels 6 gemäß Fig. 4 werden die Zungen 32 gegeneinander gedrückt und liegen dabei dichtend an der Innenfläche des rinnenförmigen Profils 35 an. Das rinnenförmige Profil 35 bildet über dem Stirnrand der Zungen 32 einen Zwischenraum 38, der freibleibt. Der Stirnrand 37 tritt in die Umfangsrinne 52 ein. Da die Kegelfläche 31 eine größere Steilheit als die Kegelfläche 53 hat, wird die Kegelfläche 53 teilweise verdrängt, so daß eine sichere Abdichtung erzielt wird.

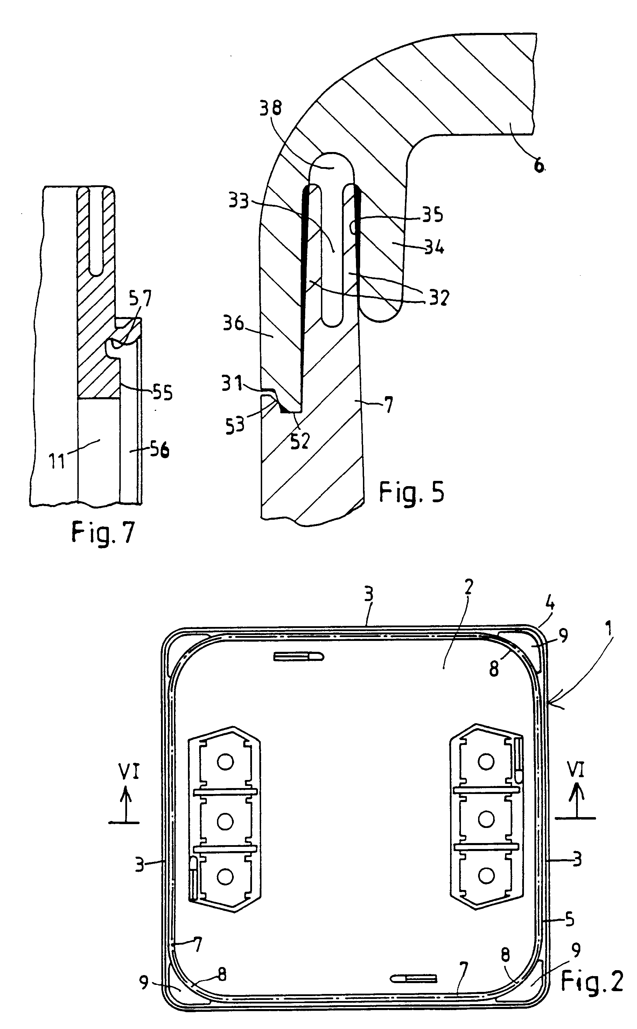

Fig. 5 zeigt in vergrößertem Maßstab die Verhältnisse der Abdichtung. Der Dichtsteg 7 mit den Zungen 32 ist in unverformten Zustand dargestellt, ebenfalls die Umfangsrinne 52. Man erkennt, wie dieses unverformte Profil der Zungen 32 in das rinnenförmige Profil 35 einschneidet. Hierdurch wird die beschriebene Verformung hervorgerufen. Ebenso erkennt man den gegenseitigen Einschnitt der Kegelfläche 53 und 31. Auch im Bereich dieser Kegelfläche bildet sich eine Verformung des Werkstoffes aus, so daß dort eine hohe Abdichtung gewährleistet ist. Kriechwege können sich gegebenenfalls von im Bereich der Kegelflächen 53 und 31 und der Dichtfläche zwischen dem Schenkel 36 und der äußeren Zungen 32 ausbilden. Diese Kriechwege enden jedoch in dem Zwischenraum 38, so daß dort der kapillare Druck aufgehoben ist und kein Kriechwasser in diesen Zwischenraum 38 eindringen kann. Ein Eindringen in die Dichtfläche zwischen der inneren Zunge 32 und dem Schenkel 34 ist gänzlich ausgeschlossen. Die Erfindung sichert so eine vollständige und sichere Abdichtung nach den Vorschriften über den Strahlwasserschutz von Installationsgeräten.

Der Deckel 6 wird in beliebiger Weise an dem Gehäuseunterteil festgehalten, z. B. durch die Haltefüße 10, durch Schrauben oder durch andere Klemmelemente.

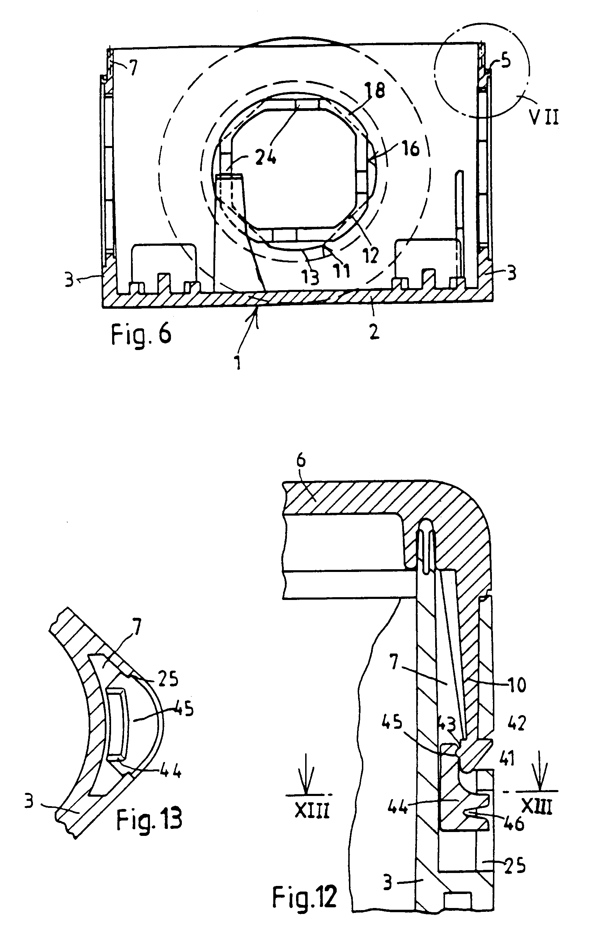

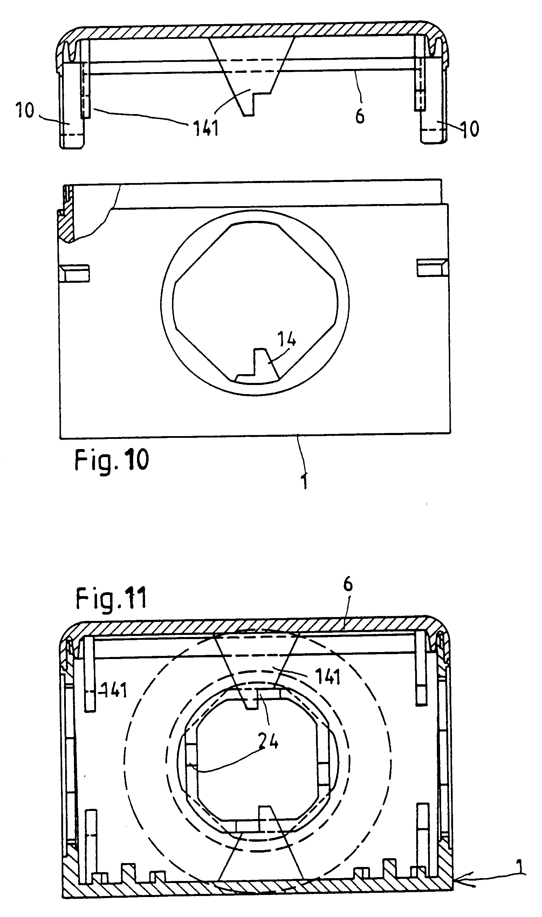

Gemäß Fig. 1 und 6 hat das Fenster 11 einen Umriß aus Geradenabschnitten 12 und Kreisbogenabschnitten 13. Jeweils ein Geradenabschnitt 12 und Kreisbogenabschnitt 13 erstrecken sich zusammen über einen Viertelskreisbogen, so daß man nach Fig. 1 eine vierzählige Aufteilung des Umrisses hat. Allgemein kann sich ein Geradenabschnitt und ein Kreisbogenabschnitt über einen n-tel-Teilbogen mit n = 3, 4 ... erstrecken. Entsprechend der Zähligkeit des Umrisses kann man das Fenster 11 in unterschiedlichen Stellungen ausnutzen. Von der Bodenwand 2 ragt nach Fig. 10 eine Rastzunge 14 auf, die einem Rand des Fensters 11 gegenübersteht und deren Funktion später in Einzelheiten erläutert wird.

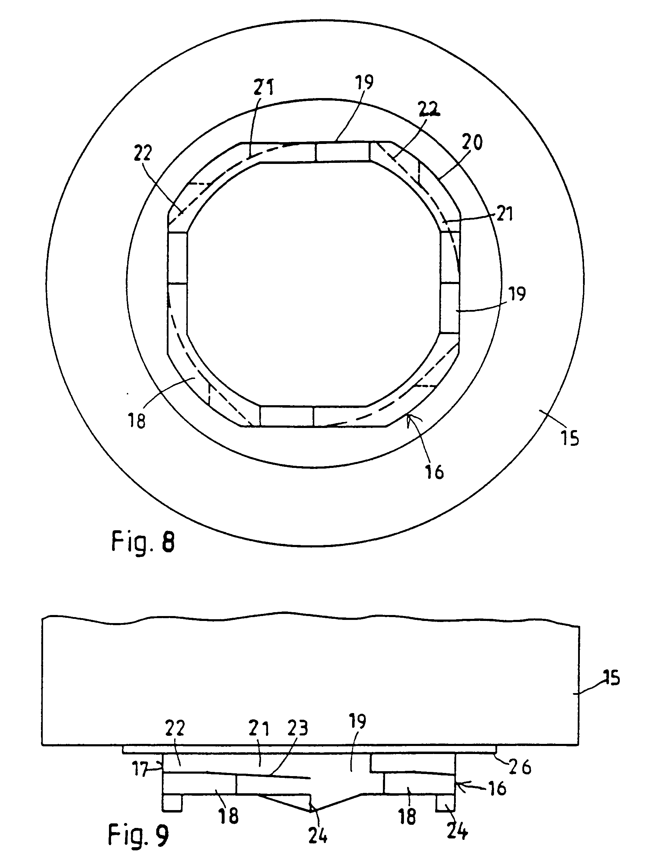

Jedes Fenster 11 nimmt einen Dichtflansch 16 eines Anschlußteils 15 auf. Der Dichtflansch 16 ist in den Fig. 7 bis 9 in Einzelheiten erläutert und besteht aus einem Hals 17, dessen Umriß noch genau beschrieben wird, und einem nach außen vorspringenden Kragen 18, der sich aus einzelnen Abschnitten zusammensetzt. Der Außenumriß des Kragens 18 ist dem Umriß des Fensters 11 gleich, damit der Kragen 18 durch das Fenster 11 hindurchgeschoben werden kann. Der Umriß des Kragens 18 setzt sich also ebenfalls aus Geradenabschnitten 19 und Kreisbogenabschnitten 20 zusammen.

Der Hals 17 weist jeweils Teilprofile auf, die sich jeweils aus einem von der Mitte eines Geradenabschnittes ausgehenden Kreisbogenabschnitt 21 und einem daran tangential anschließenden Geradenabschnitt 22 zusammensetzen. Am Ende des Geradenabschnittes 22 setzt sich der Umriß mit einem Knick in den Geradenabschnitt 19 fort. Der Kreisbogenabschnitt 21 erstreckt sich jeweils über den halben genannten Teilbogen. Wenn also ein Viertelskreisbogen gemäß der dargestellten Ausführungsform vorgesehen ist, so erstreckt sich der Kreisbogen 21 über einen Achtelskreisbogen oder 45°.

Über den Kreisbogenabschnitt 21 und den Geradenabschnitt 22 stehen die Teile des Kragens 18 vor. Über den Kreisbogenabschnitt 20 erstreckt sich auf der Flanschunterseite ein Rampenprofil 23, das in Richtung des Kreisbogenabschnittes ansteigt. In der Darstellung nach den Fig. 8 und 9 ist die Einsteckrichtung des Dichtflansches senkrecht zur Zeichenebene und zwar aus derselben heraustretend ausgerichtet. Der Kreisbogenabschnitt 21 erstreckt sich von der genannten Mitte des Geradenabschnittes 19 aus, in der Einsteckrichtung gesehen, in positiver Umfangsrichtung. In der Darstellung der Fig. 8 ergibt sich eine negative Umfangsrichtung. Dieses bedeutet, daß man nach dem Einstecken des Dichtflansches 26 durch eine Linksdrehung ein Festziehen des Halsprofils innerhalb des Fensters erreicht. Der Dichtflansch 26 hat eine zylindrische Umfangsfläche, die innerhalb einer Dichtstufe 55 des Fensters 11 abdichtet. Die Dichtstufe 55 hat eine etwa zylindrische Dichtwand 56 und eine Hinterschneidungsnut 57. Die Dichtwand 56 hat vorzugsweise ein balliges Profil. Die Umfangsfläche des Dichtflansches 26 und die Dichtwand 56 passen fest und dichtend ineinander. Die Hinterschneidungsnut 57 stellt eine Unterbrechung der Kriechwege dar und sichert so eine Feuchtigkeitsabdichtung und Strahlwasserfestigkeit.

Auf der Stirnseite des Kragens 18 sind Rastzähne 24 ausgebildet, die mit der Rastzunge 14 zusammenwirken und ein Rückdrehen des Flanschteils sperren. Die Rastzunge 14 ist nachgiebig ausgebildet, so daß die Verrastung jederzeit aufgehoben werden kann und eine Abnahme des Anschltußteils möglich ist.

Die Fig. 10 und 11 zeigen eine abgewandelte Ausführungsform, bei der neben den Rastzungen 14 am Boden auch am Deckel 6 Rastzungen 141 angeordnet sind. Mit dieser Anordnung ist eine Verrastung des Anschlußteils in entsprechender Weise möglich, wie dies in Fig. 11 dargestellt ist. Nach dem Aufsetzen des Deckels ist eine Verriegelung des Anschlußteils möglich. Das Anschlußteil kann bereits vor dem Aufsetzen des Deckels in das Gehäuseunterteil eingeklemmt werden. Es ist andererseits auch nach dem Aufsetzen des Deckels ein Einführen des Anschlußteils und ein Verklemmen und Verrasten desselben möglich. Nach der Abnahme des Gehäusedeckels ist daß Anschlußteil jeweils entriegelt, wobei die bodenseitigen Zungen aus der Raststellung ausgelenkt werden können.

Die Fig. 12 und 13 zeigen in Einzelheiten die Sicherung und Verriegelung der Haltefüße 10. Diese Verriegelung ist notwendig, damit die Haltefüße 10 unter der Einwirkung von Strahlwasser nicht ungewollt ausgerastet werden, da die Haltefüße in Querrrichtung des Kanals nachgiebig sind. Ein Haltefuß 10 hat eine Rastnase 41, die in eine Kante 42 des Durchbruchs 25 einrastet. Auf der der Rastnase 41 gegenüberliegenden Seite ist ein Verriegelungsprofil 43 vorgesehen.

Zur Verriegelung des Haltefußes 10 ist ein Verriegelungsschieber 44 mit sichelförmigem Querschnitt vorgesehen, der in den Durchbruch 25 eingeführt und in den sichelförmigen Kanal 10 aufgenommen werden kann, wie man insbesondere dem Querschnitt der Fig. 13 entnimmt. Der Verriegelungsschieber 44 hat einerseits ein dem Verriegelungsprofil 43 entsprechendes paariges Verriegelungsprofil 45 und andererseits einen Betätigungsschlitz 46 oder eine andere Betätigungshandhabe. Der Verriegelungsschieber 45 ist in Kanallängsrichtung verschiebbar. In den Betätigungsschlitz 46 kann z. B. die Klinge eines Schraubendrehers eingeführt werden.

Nach dem Aufsetzen des Deckels 6 verrastet jeweils die Rastnase 41 an der Kante 42 des Durchbruchs 25. Zur Sicherung und Verriegelung des Haltefußes 10 in dieser Raststellung wird der Verriegelungsschieber 44 in die in Fig. 13 eingezeichnete Verriegelungsstellung geschoben, in der die Verriegelungsprofile 43 und 45 ineinander eingreifen. Der Verriegelungsschieber 44 spannt den Haltefuß 10 gegen die Außenwand des Kanals 9. Dadurch wird der Haltefuß 10 in der Raststellung verriegelt, so daß auch durch Anwendung von Druck eine Aufhebung der Verastung nicht möglich ist. Es hat sich gezeigt, daß durch diese Ausbildung eine Strahlwassersicherheit der Verrastung gewährleistet ist.

## Patentansprüche

1. Strahlwassergeschütztes Anschlußgehäuse für elektrische Verbraucher mit einem Gehäuseunterteil (1), das an der Deckelseite einen umlaufenden Dichtsteg (7) aufweist, und mit einem Deckel (6), dessen umlaufende Dichtleiste (54) ein rinnenförmiges Profil (35) hat den zwei durch einen Spalt (33) getrennte Zungen (32) aufweisenden Dichtsteg (7) abdichtend übergreift, wobei die Wände des Gehäuseunterteils (1) Fenster (11) zur Aufnahme je eines Dichtflansches (16) eines Anschlußteils (15) aufweisen, dadurch gekennzeichnet, daß jedes als Ausschnitt in einer Wand (3) ausgebildete Fenster (11) einen Umriß aus Geradenabschnitten (12) und zentrischen Kreisbogenabschnitten (13) mit gleichem Halbmesser hat, die jeweils zusammen einen n-tel-Teilbogen, mit n = 3, 4 ..., des Vollkreisbogens ausmachen, daß ein Kragen (18) des Dichtflansches des Anschlußteils (15) einen Außenumriß gleich dem Umriß des Fensters (11) hat und daß der Hals (17) des Kragens (18) sich jeweils über einen n-tel-Teilbogen erstreckende Teilprofile aus einem von der Mitte eines Geradenabschnitts (19) ausgehenden Kreisbogenabschnitt (21) und einem tangential daran anschließenden Geradenabschnitt (22) aufweist.

2. Anschlußgehäuse nach Anspruch 1, dadurch gekennzeichnet, daß sich der Kreisbogenabschnitt (21) des Teilprofils des Halses (17) über den halben n-tel-Teilbogen erstreckt.

3. Anschlußgehäuse nach Anspruch 1 oder 2, dadurch gekennzeichnet, daß die Flanschunterseite jeweils ein in Richtung des Kreisbogenabschnitts (21) ansteigendes Rampenprofil (23) hat.

4. Anschlußgehäuse nach Anspruch 1 oder 2, dadurch gekennzeichnet, daß der Umriß des Fensters (11) und das Halsprofil jeweils vierzählig bemessen sind.

5. Anschlußgehäuse nach einem der Ansprüche 1 bis 4, dadurch gekennzeichnet, daß bezogen auf die Einsteckrichtung der Flansches der Kreisbogenabschnitt (21) des Halsprofils sich in Uhrzeigersinn gegen den Geradenabschnitt (22) hin erstreckt.

6. Anschlußgehäuse nach einem der Ansprüche 1 bis 5, dadurch gekennzeichnet, daß der Flansch rastend mit dem Fenster zusammenwirkt.

7. Anschlußgehäuse nach einem der Ansprüche 1 bis 6, dadurch gekennzeichnet, daß eine zylinrische Dichtstufe (55) des Fensters (11) eine Umfangsfläche des Dichtrandes (26) dichtend umschließt.

8. Anschlußgehäuse nach Anspruch 7, dadurch gekennzeichnet, daß daß an die zylindrische Dichtwand (56) eine Hinterschneidungsnut (57) anschließt.

9. Anschlußgehäuse nach Anspruch 1, dadurch gekennzeichnet, daß auf der Stirnfläche des Dichtflansches (16) Rastzähne (24) angeordnet sind, die mit mindestens einer Rastzunge (14) des Gehäuseunterteils (1) zusammenwirken.

10. Anschlußgehäuse nach Anspruch 1, dadurch gekennzeichnet, daß auf der Stirnfläche des Dichtflansches (16) Rastzähne (24) angeordnet sind, die mit einer Rastzunge (141) des Gehäusedeckels (6) zusammenwirken.

11. Anschlußgehäuse nach Anspruch 9 oder 10, dadurch gekennzeichnet, daß die Rastzungen (14 bzw. 141) aus der Raststellung ausrückbar ausgebildet sind.

12. Anschlußgehäuse nach Anspruch 1 bis 11, dadurch gekennzeichnet, daß der Dichtsteg (7) und die Dichtleiste (34) in den Eckenbereichen des Anschlußgehäuses mit einem Bogen (8) größeren Durchmessers als der Außenbogen (4) des Gehäuses verlaufen und jeweils einen sichelförmigen Kanal (9) für den Durchtritt eines Haltefußes (10) des Deckels (6) freilassen.

13. Anschlußgehäuse nach Anspruch 12, dadurch gekennzeichnet, daß der Haltefuß (10) eine nach außen gerichtete Rastnase (41) aufweist, die in einen Ausbruch (25) in der Wand des Kanals (9) eingreift.

14. Anschlußgehäuse nach Anspruch 12 oder 13, dadurch gekennzeichnet, daß innerhalb des Kanals (9) ein in Kanallängsrichtung verschiebbarer Verriegelungsschieber (44) angeordnet ist, der in Verriegelungsstellung den Haltefuß (10) in Rasteingriff mit dem Ausbruch (25) des Kanals (9) hält.

15. Anschlußgehäuse nach Anspruch 14, dadurch gekennzeichnet, daß der Verriegelungsschieber (44) ein Verriegelungsprofil (45) aufweist, das in der Verriegelungsstellung mit einem Verriegelungsprofil (43) des Haltefußes (10) in Eingriff ist.

16. Anschlußgehäuse nach Anspruch 14 oder 15, dadurch gekennzeichnet, daß der Verriegelungsschieber (44) einen sichelförmigen Querschnitt entsprechend dem Querschnitt des Kanals (9) hat.

17. Anschlußgehäuse nach einem der Ansprüche 1 bis 16, dadurch gekennzeichnet, daß die Breite des Dichtsteges (7) größer als die lichte Weite des rinnenförmigen Profils (35) ist.

18. Anschlußgehäuse nach Anspruch 17, dadurch gekennzeichnet, daß das rinnenförmige Profil (35) in zusammengefügtem Zustand des Anschlußgehäuses einen Zwischenraum (38) oberhalb der Zungenenden freiläßt.

19. Anschlußgehäuse nach Anspruch 17 oder 18, dadurch gekennzeichnet, daß der Dichtsteg (7) eine umlaufende Außenstufe (5) mit einer Umfangsrinne (52) aufweist und daß die Dichtleiste (54) mit einem Stirnrand (37) in die Umfangsrinne (52) eingreift.

20. Anschlußgehäuse nach Anspruch 19, dadurch gekennzeichnet, daß die Außenstufe (5) und der Stirnrand (37) jeweils Kegelflächen (53, 31) aufweisen.

21. Anschlußgehäuse nach Anspruch 20, dadurch gekennzeichnet, daß die äußere Kegelfläche (31) des Stirnrandes (37) eine größere Steilheit als die entsprechende Kegelfläche (53) der Umfangsrinne (52) aufweist.

## Claims

1. Jet-proof adapter box for current consumers with a base structure (1) that has an all-round sealing ridge (7) on the cover side and with a cover (6) the all-round sealing strip (54) of which has a trough-shaped section (35) and in a sealing manner overlaps the sealing ridge (7) presenting two tongues (32) separated by a gap (33) and with the walls of the base structure (1) having windows (11), each of which holds a sealing flange (16) of a connector (15), characterized in that each window (11) formed as a cutout in a wall (3) has a contour consisting of straight sections (12) and centric arc sections (13) with the same radius, which together form in each case an nth partial arc, with n = 3, 4 ..., of the full arc, that a collar (18) of the sealing flange of the connector (15) has an external contour identical with the contour of the window (11) and that the neck (17) of the collar (18) has in each case a partial section extending over one nth partial arc from one arc section (21) starting from the centre of a straight section (19) and a straight section (22) running at a tangent to it.

2. Adapter box according to claim 1, characterized in that the arc section (21) of the partial section of the neck (17) extends across half the partial arc.

3. Adapter box according to claim 1 or claim 2, characterized in that the underside of the flange has in each case a sloping profile (23) rising towards the arc section.

4. Adapter box according to claim 1 or claim 2, characterized in that the contour of the window (11) and the neck profile are dimensioned in a four-fold manner respectively.

5. Adapter box according to one of claims 1 through 4, characterized in that, in relation to the insertion direction of the flange, the arc section (21) of the neck profile extends towards the straight section in clockwise direction.

6. Adapter box according to one of claims 1 through 5, characterized in that the flange acts on an engaging principle with the window.

7. Adapter box according to one of claims 1 through 6, characterized in that a cylindrical sealing step (55) of the window (11) encloses a peripheral surface of the sealing edge (26) with a sealing effect.

8. Adapter box according to claim 7, characterized in that an undercut groove (57) contacts the cylindrical sealing wall (56).

9. Adapter box according to claim 1, characterized in that engaging teeth (24) that act in conjunction with at least one engaging tongue (14) of the base structure (1) are located on the face surface of the sealing flange (16).

10. Adapter box according to claim 1, characterized in that engaging teeth (24) that act in conjunction with an engaging tongue (141) of the box cover (6) are located on the face surface of the sealing flange (16).

11. Adapter box according to claim 9 or claim 10, characterized in that the engaging tongues (14 or 141 respectively) are designed so as to be disconnectable from the engaged position.

12. Adapter box according to claims 1 through 11, characterized in that the sealing ridge (7) and the sealing strip (34) run in the corner areas of the adapter box with an arc (8) of greater diameter than the outside arc (4) of the box and leave a sickle-shaped channel (9) free in each case for the emergence of a retaining foot (10) of the cover (6).

13. Adapter box according to claim 12, characterized in that the retaining foot (10) has an outwardly directed engaging lug (41) that engages in a opening (25) in the wall of the channel (9).

14. Adapter box according to claim 12 or claim 13, characterized in that an interlocking slide (44) that keeps the retaining foot (10) engaged with the opening (25) in the channel (8) is located within the channel (9) and can be moved in the longitudinal direction of the channel.

15. Adapter box according to claim 14, characterized in that the interlocking slide (44) has an interlocking profile (45) that engages in interlock position with an interlocking profile (43) of the retaining foot (10).

16. Adapter box according to claim 14 or claim 15, characterized in that the interlocking slide (44) has a sickle-shaped cross section corresponding to the cross section of the channel (9).

17. Adapter box according to one of claims 1 through 10, characterized in that the width of the sealing ridge (7) is greater than the inside width of the trough-shaped section (35).

18. Adapter box according to claim 17, characterized in that the trough-shaped section (35) leaves a space (38) free above the ends of the tongues when the adapter box is in an assembled state.

19. Adapter box according to claim 17 or claim 18, characterized in that the sealing ridge (7) has an all-round external step (5) with a peripheral trough (52) and that the sealing strip (54) engages with a face edge (37) in the peripheral trough (52).

20. Adapter box according to claim 19, characterized in that the external step (5) and the face edge (37) each have conical surfaces (53, 31).

21. Adapter box according to claim 20, characterized in that the external conical surface (31) of the face edge (37) is steeper than the corresponding conical surface (53) of the peripheral trough (52).

## Revendications

1. Boîtier de raccordement pour des appareils électriques, protégé contre des projections d'eau, comportant une partie inférieure de boîtier (1) qui présente du côté du couvercle une nervure périphérique d'étanchéité (7), et comportant un couvercle (6) dont la bordure périphérique d'étanchéité (54) a un profil en forme de rigole (35) et chevauche de manière hermétique la nervure d'étanchéité (7) qui présente deux languettes (32) séparées par un interstice (33), tandis que les parois de la partie inférieure du boîtier (1) présentent des fenêtres (11) pour le logement de chaque fois une collerette d'étanchéité (16) d'une pièce de raccordement (15), caractérisé en ce que chaque fenêtre (11) présentant la forme d'une découpe dans une paroi (3) a un contour composé de tronçons rectilignes (12) et de tronçons centrés d'arc de cercle (13) de même rayon, qui constituent respectivement chaque fois ensemble une courbe partielle de division par n, avec n = 3, 4, de l'arc de cercle complet, en ce qu'un collet (18) de la collerette d'étanchéité de la pièce de raccordement (15) a un contour extérieur identique au contour de la fenêtre (11), et en ce que la gorge (17) du collet (18) présente, s'étendant chaque fois sur une courbe partielle de division par n, des profils partiels constitués d'un tronçon en arc de cercle (21), partant du milieu d'un tronçon rectiligne (19), et d'un tronçon rectiligne (22) se raccordant tangentiellement au tronçon en arc de cercle (21).

2. Boîtier de raccordement selon la revendication 1, caractérisé en ce que le tronçon en arc de cercle (21) du profilé partiel de la gorge (17), s'étend sur la moitié de la courbe partielle de division par n.

3. Boîtier de raccordement selon la revendication 1 ou 2, caractérisé en ce que la face inférieure de la collerette présente chaque fois un profil en pente (23) remontant en direction du tronçon en arc de cercle (21).

4. Boîtier de raccordement selon la revendication 1 ou 2, caractérisé en ce que le contour de la fenêtre (11) et le profil de la gorge sont chacun partagés en quatre.

5. Boîtier de raccordement selon l'une des revendications 1 à 4, caractérisé en ce que par rapport au sens d'insertion de la collerette, le tronçon en arc de cercle (21) du profil de gorge s'étend dans le sens des aiguilles d'une montre vers le tronçon rectiligne (22).

6. Boîtier de raccordement selon l'une des revendications 1 à 5, caractérisé en ce que la collerette coopère par accrochage élastique avec la fenêtre.

7. Boîtier de raccordement selon l'une des revendications 1 à 6, caractérisé en ce qu'un épaulement cylindrique d'étanchéité (55) de la fenêtre (11) entoure hermétiquement une surface périphérique du bord d'étanchéité (26).

8. Boîtier de raccordement selon la revendication 7, caractérisé en ce qu'une rainure à contre-découpe (57) se raccorde à la paroi cylindrique d'étanchéité (56).

9. Boîtier de raccordement selon la revendication 1, caractérisé en ce que sur la surface frontale de la collerette d'étanchéité (16) sont disposées des dents d'accrochage élastique (24) qui coopèrent avec au moins une languette d'accrochage élastique (14) de la partie inférieure de boîtier (1).

10. Boîtier de raccordement selon la revendication 1, caractérisé en ce que sur la surface frontale de la collerette d'étanchéité (16) sont disposées des dents d'accrochage élastique (24) qui coopèrent avec une languette d'accrochage élastique (141) du couvercle (6) du boîtier.

11. Boîtier de raccordement selon la revendication 9 ou 10, caractérisé en ce que les languettes d'accrochage élastique (14 ou 141) sont réalisées de manière à pouvoir être reculées hors de la position d'accrochage élastique.

12. Boîtier de raccordement selon l'une des revendications 1 à 11, caractérisé en ce que la nervure d'étanchéité (7) et la bordure d'étanchéité (34) dans les zones des coins du boîtier de raccordement s'étendent avec un arc (8) de plus grand diamètre que celui de l'arc extérieur (4) du boîtier et laissent chaque fois libre un canal (9) en forme de croissant pour le passage d'un pied de maintien (10) du couvercle (6).

13. Boîtier de raccordement selon la revendication 12, caractérisé en ce que le pied de maintien (10) présente un nez d'accrochage élastique (41) orienté vers l'extérieur et qui pénètre dans une découpe (25) de la paroi du canal (9).

14. Boîtier de raccordement selon la revendication 12 ou 13, caractérisé en ce qu'à l'intérieur du canal (9) est disposé un coulisseau de verrouillage (44) qui peut être déplacé dans la direction longitudinale du canal et qui, en position de verrouillage, bloque le pied de maintien (10) en prise d'accrochage avec la découpe (25) du canal (9).

15. Boîtier de raccordement selon la revendication 14, caractérisé en ce que le coulisseau de verrouillage (44) présente un profil de verrouillage (45) qui, dans la position de verrouillage, est en prise avec un profil de verrouillage (43) du pied de maintien (10).

16. Boîtier de raccordement selon la revendication 14 ou 15, caractérisé en ce que le coulisseau de verrouillage (44) a une section transversale en forme de croissant correspondant à la section transversale du canal (9).

17. Boîtier de raccordement selon l'une des revendications 1 à 16, caractérisé en ce que la largeur de la nervure d'étanchéité (7) est plus grande que la largeur libre du profil (35) en forme de rigole.

18. Boîtier de raccordement selon la revendication 17, caractérisé en ce que le profil (35) en forme de rigole laisse libre, en l'état assemblé du boîtier de raccordement, un espace intermédiaire (38) au-dessus des extrémités des languettes.

19. Boîtier de raccordement selon la revendication 17 ou 18, caractérisé en ce que la nervure d'étanchéité (7) présente un gradin extérieur périphérique (5) avec une rigole périphérique (52), et en ce que la bordure d'étanchéité (54) pénètre par un bord frontal (37) dans la rigole périphérique (52).

20. Boîtier de raccordement selon la revendication 19, caractérisé en ce que le gradin extérieur (5) et le bord frontal (37) présentent chacun des surfaces obliques (53, 31).

21. Boîtier de raccordement selon la revendication 20, caractérisé en ce que la surface oblique extérieure (31) du bord frontal (37) présente une pente plus importante que la surface oblique correspondante (53) de la rigole périphérique (52).
